# EUROPEAN PATENT APPLICATION

(11) **EP 0 554 870 A1**
(43) Date of publication of application: **11.08.1993**
(21) Application number: 93101742.0
(22) Date of filing: 04.02.1993
(51) Int. Cl.: G11B 17/24

(54) **Automatic changer for information supports**

(30) Priority: 05.02.1992 BE 9200118
(71) Applicant: Staar Development Company -S.A., B-1050 Bruxelles (BE)
(72) Inventor: Staar, Marcel, B-1050 Bruxelles (BE)
(74) Representative: Baronetzky, Klaus, Dipl.-Ing.

(57) **Abstract**

Automatic changer for information supports (8) in the form of discs, cards, with or without protection case or envelope is provided. The supports are placed radialy in a rotative magazine (2) in a form of a flat ring and overlay each other partially and form a very sharp angle against the magazine plane. Means are provided to dispose one or several fixed read or write apparatuses (14) around the magazine, and means are provided to make the magazine turning so as to present selectively one or another information support in front of any one of the read or write units. Furtheron, means are provided to transport an information support from the magazine into a read or write unit, and vice versa, and means are provided to access the other face of an information support.

## Description

This inventions propose means to realize an automatic changer system for informations supports in form of disc, cards, with or without a protection case or envelope, very reliable and very compact.

To realize those targets, it is essentially proposed to place radially the information supports in locations of a rotative mobile magazine in an annular form of little thickness, the supports partially overlaping to form a very sharp angle from the magazine plane, means are provided to rotate the magazine so as to present in front of whatever fixed reading or recording apparatus placed radially around the ring, one or the other information support placed in the magazine, and means are provided to transport an information support from the magazine into a reading or recording apparatus and vice versa, means are provided to access to the other side of an information support.

To make well understand the invention, non-limitative examples will be given hereafter.

In FIG. 1, a support 1 is shown on which a rotative magazine 2 is mounted and also several fixed reproducers/recorders 3 , disposed radially around the magazine.

FIG. 2 gives a cut view of FIG. 1. The magazine 2 pivots on a fixed shaft 4 fixed on the chassis 1 and may be put in rotation by a motor 5 which by means of a belt 6, put in rotation a support turntable 7, taking in rotation the magazine 2.

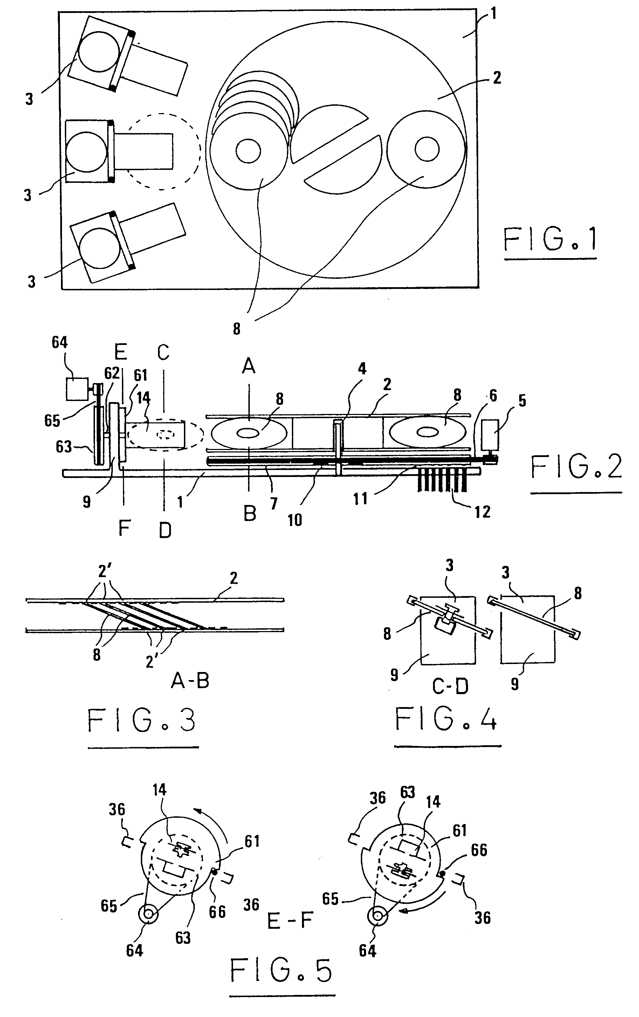

Information supports in the form of optical discs 8 are placed in a position relatively near the horizontal and allows a magazine of little thickness, FIG. 3 (cut view A-B of FIG. 2), the supports overlaping partially and so permiting to stock a large quantity of information supports placed at the circumference of the magazine.

By turning, the magazine will thus present a whatever support 8 in front of a whatever reproduction or recording apparatus 3, fixed solidarly on the chassis 1 by a support 9, in the same angle than the angle formed by the disc 8 in the magazine, FIG. 4 (cut view C-D of FIG. 2).

The selective stop of the magazine on a whatever position is determined by one of the classic systems, very well known and which is not necessary to describe for the good understanding of the invention, for example, by means of an encoder 10 mounted on the turntable 7 which could take relative positions with respect to the chassis 1, in combination with a selector, not represented, controling the feeding of a step motor 5.

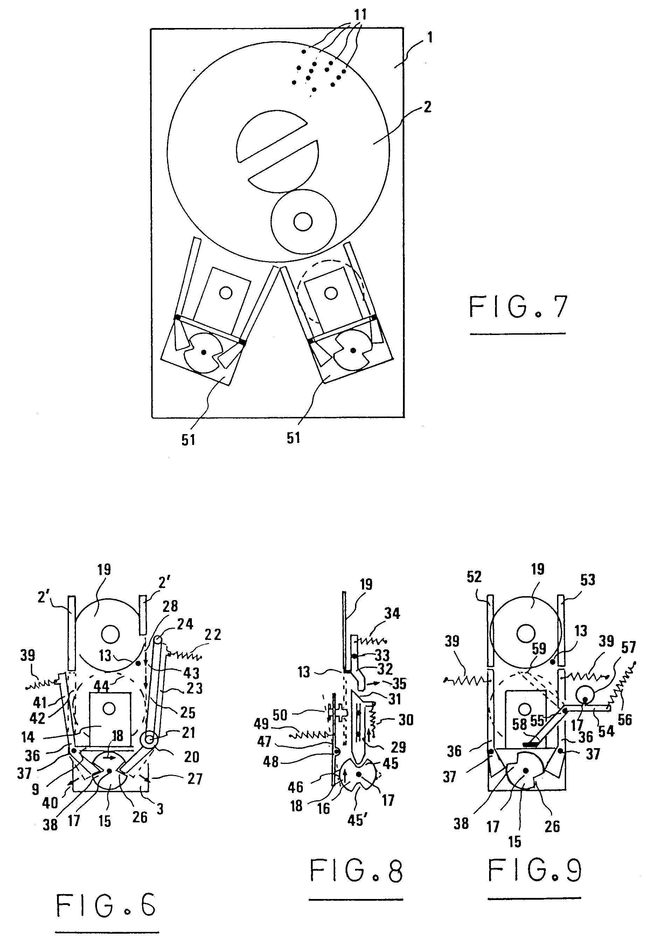

Or, for example, the discs positions in the magazine may be determined by a coding by combination of a serie of points or holes 11 on the turntable 7 of which the magazine is united in its rotation, and which combination may be read by a serie of photosensitive emitters/receivers 12, mounted fixed on the chassis and of which every coding combination will correspond to the different angular positions of the magazine 2, FIG. 2 and 7.

FIG. 6 gives an example of a transfer system for an information support, from the magazine into a reproducer/recorder and vice versa.

We see a disc 8 maintained in the magazine 2 , in the grooves 2' and momentarilly maintained by an abutment 13, FIG. 8.

The reproducers/recorders and the disc transfer mecanism, form each time a modular block 3 and it will be thus possible to place, following the needs, one or several modules 3 around the magazine.Those modules are mounted in the same inclination as the inclination of the disc in the magazine, which elements may thus partially overlaping, FIG. 4, and so may be assembled very near, one against the others.

In the represented example, every module includes a standard reproducer 14 composed of a motor to rotate the disc, and a reading system by a laser beam for processing the informations of an optical disc 8, of which the elements form a standard unit well known and not represented, and mounted on the support 9.

On the support 9 also are mounted cams 15-16 part of a shaft 17 of a speed reduced motor and turning in the direction of the arrows 18 , (FIG. 6-8).

When the magazine stops and present a disc 19 in front of a reader 14, the cam 15 begins to rotate and pushes the lever 20, pivoting around a motor 21, fixed on the support 9, against the return spring 22.

Part 23 of the lever 20 carry a rotative roll 24 used to support and guide a belt 25 powered by the motor pulley 21.

The notch 26 of the cam 15 pushes back the lever 20 in the direction of the arrow 27, and the belt 25 is put in contact with the edge of the disc in 28.

At the same moment, the cam 16 has begin to turn and has pushed back the slide 29, against a return spring 30, and the sloped part 31 pushes the lever 32, pivoting on an axle 33 fixed on the magazine, against the return spring 34, in the direction of the arrow 35, and the abutment 13 eclipse itself.

At the same moment also, a guide lever 36, pivoting around an axle 37, fixed on the support 9, is rejected from the notch 38, against the return spring 39 in the direction of the arrow 40, and the end 41 of the lever 36 take the position 42 in front of the groove 2'.

The motor 21 is then powered to drive the belt 25 in the direction of the arrow 43, and the disc so driven by its edge, take the position 44, in the reproducer 14.

Cams 15 and 16 has continued to turn until a half cycle is completed, it is to say 180°, and the notch 38 is located now at the preceding position of notch 26 and vice versa, and levers 20 and 36 may wide apart under the action of the return spring 39 and 22, and liberate the disc 19 in the reproduction apparatus 14, the notch 45 of the cam 16 has taken the place of notch 45' and the slide 29, under the action of spring 30, take back its retracted place.

The overhanging 46 of the cam 16 has also completed 180° and pushes back now the lever 47, pivoting in 48 against return spring 49 to center and fix the disc 19 on the hub of its powered turntable by means of a magnetized part 50.

The half cycle is completed and the informations on the disc 19 may be read and processed.

During the reproduction or the recording of the informations on the disc 19, the magazine may rotate and another disc 19 may be loaded or unloaded from another module.

When the processing of the informations of a disc 19 is completed, cams 15-16 begins the 180° remaining to terminate a complete mechanical cycle following the sequence.

By turning, the overhanging 46 allows lever 47 to return part 50, under the action of spring 49, to liberate the disc 19.

At the same moment, the slide 29, by the sloped part 31, pushes back the lever 32 and freed the passage by retracting abutment 13.

At the same moment also, the notches 26 and 38 of the cam 15 pushes back the guide lever 36, and lever 20 puts in contact the edge of disc 19 with the belt 25.

The motor 21 then powers in the opposed direction as the one of arrow 43, and make the disc 19 roll in the grooves guides 41 and 2' until its position in the magazine.

At that moment, cam 16 present a notch at the slide 29 which take place therein , and lever 32, under the return spring 34 action, repositioned abutment 13 and the disc is locked in the magazine.

The notches 26 and 38 are positioned as on the starting of the cycle, and levers 20 and 37 disengaged under the action of return springs 22-39.

The magazine may rotate and present another disc 19, and the mechanical cycle may recommence.

FIG. 7-9 gives an example of an information support transport, from the magazine into a reading or recording apparatus, by gravity.

A changer is shown in which the magazine 2 has a higher location as the location of modules 51.

The disc 19 is guided in grooves 52-53, of the magazine 2, and imprisoned by a retractable abutment 13 as in preceding example, (FIG. 8).

The 2 guide levers 36 are mounted on both sides of the reprocing/recording apparatus so as to be able to aling with grooves 52-53, so, when abutment 13 retracts, nothing prevent the disc to descent by gravity in its position in the reproducer/recorder.

Cams 15 and 16 discart the guide lever 36 from the outside rim of the disc when it has reached its active position, and move the lever 47 to center and fix the disc on its motorized hub.

When the informations of a disc has been read, the mechanism may start the second half cycle.

The guides 36 draw close to guide the disc, the centering part 50 is retracted, the abutment 13 is retracted and lever 54 pivots in 55 and pushes back, against return spring 56, the disc 19 in the magazine 2 by the action of cam 57 fixed on the same motorized shaft 17 of cams 15-16 and turns in synchronism with them.

When part 58 of lever 54 arrives to position 59, the abutment 13 is placed in position and imprisoned the disc 19 in the magazine.

The magazine may again turn so as to present another information support in front of whichever reproducer/recorder apparatus, and the mechanical cycle may recommence.

Some information supports types carry informations on both sides.

For those types of supports, it is provided to be able to access on one or the other side by turning by 180° the reproducer/recorder 14, FIG. 5, (cut view E-F of FIG. 2).

The reproducer/recorder is mounted on a plate 61 which has an axle 62 able to turn in support 9 which has a pulley 63 able to turn by means of a motor 64 with a belt 65, in one or the other direction until it reach an abutment 66, part of support 9.

When the reproducer 14 is stoped by the abutment 66, in one or the other direction, its center coincide exactly with the edge center of the disc, so as the disc may be symetrically introduced in one position, and in the position at 180°.

## Claims

1. Automatic changer for information supports in the form of discs, cards or the like, with or without protection case or envelope, characterized in that the supports are placed radially in a rotative magazine in a form of a flat ring, the supports overlaying each other partially and form a very sharp angle against the magazine plane, one or several fixed read or write apparatuses are disposed around the magazine, means are provided to make the magazine turning so as to present selectively one or another information support in front of any one of the read or write units, and transport means are capable to transport an information support to and from the magazine out of and into a read or write unit, and vice versa, and access means are provided to access the other face of the information support.

2. Automatic changer according to claim 1, characterized in that said transport means are realized by using a belt driven by an electric motor and being able to be put momentarily in contact with the edge of an information support.

3. Automatic changer according to one of the preceding claims, characterized in that said transport means are realized by utilizing gravity, by disposing the read or write apparatuses in a position lower than an information support storage position in the magazine, with the read or write apparatus being substantially in the same horizontal plane as the magazine.

4. Automatic changer according to one of the preceding claims, characterized in that the transport means comprises a lever driven by an electric motor destinated to overcome the gravity and to push back the information support into the magazine.

5. Automatic changer according to one of the preceding claims, characterized in that the access means provided to being able to access the other face of an information support are realized by means for a rotation of 180° of the reproduction or recording apparatus.
